Europäisches Patentamt

European Patent Office

Office européen des brevets

(11) Veröffentlichungsnummer: **0 246 694 B1**

## EUROPÄISCHE PATENTSCHRIFT

(45) Veröffentlichungstag der Patentschrift: **05.08.92**

(21) Anmeldenummer: **87200870.1**

(22) Anmeldetag: **12.05.87**

(51) Int. Cl.⁵: **G11B 15/28**, G11B 15/29, G11B 15/295

(54) **Aufzeichnungs- und/oder Wiedergabegerät.**

(30) Priorität: **20.05.86 AT 1327/86**

(43) Veröffentlichungstag der Anmeldung:
**25.11.87 Patentblatt 87/48**

(45) Bekanntmachung des Hinweises auf die
Patenterteilung:
**05.08.92 Patentblatt 92/32**

(84) Benannte Vertragsstaaten:
**AT DE FR GB IT**

(56) Entgegenhaltungen:
**AT-B- 356 410**
**DE-B- 1 140 737**
**US-A- 3 949 919**

(73) Patentinhaber: **N.V. Philips' Gloeilampenfabrieken**
**Groenewoudseweg 1**
**NL-5621 BA Eindhoven(NL)**

(72) Erfinder: **Heinrich, Norbert**
**c/o INT. OCTROOIBUREAU B.V. Prof. Holstlaan 6**
**NL-5656 AA Eindhoven(NL)**
Erfinder: **Veigl, Johann**
**c/o INT. OCTROOIBUREAU B.V. Prof. Holstlaan 6**
**NL-5656 AA Eindhoven(NL)**

(74) Vertreter: **Smit, Frederik Jan et al**
**INTERNATIONAAL OCTROOIBUREAU B.V.**
**Prof. Holstlaan 6**
**NL-5656 AA Eindhoven(NL)**

Rank Xerox (UK) Business Services

## Beschreibung

Die Erfindung bezieht sich aufein Aufzeichnungs- und/oder Wiedergabegerät für einen bandförmigen Aufzeichnungsträger, mit einem Bauteilträger, einer mit einer Welle koaxial verbundenen Antriebswelle, um den Aufzeichnungsträger anzutreiben, und mit einer zur radialen Lagerung der Welle dienenden Radiallagereinrichtung, die am Bauteilträger vorgesehen ist und die aus einem an einer Seite der Welle und zu der Welle senkrecht verstellbaren ersten Positionierzylinder und einem in Richtung der Welle mit Abstand angeordneten zur Welle fluchtenden zweiten Positionierzylinder besteht, um die Neigung der Weile einzustellen.

Ein Gerät gemäß dem eingangs angeführten Absatz ist aus der AT-A-356.410 bekannt.

Bei diesem bekannten Gerät weist die Radiallagereinrichtung zur radialen Lagerung der zu einer Antriebswelle für den Aufzeichnungsträger verlängerten Welle zusätzlich zu dem gegenüber dem durch einen Chassisteil des Gerätes gebildeten Bauteilträger verstellbaren Radiallager noch ein vom verstellbaren Radiallager in Richtung der Welle in Abstand liegendes weiteres Radiallager auf, das an einem weiteren Chassisteil angeordnet ist. Es sind somit bei dem bekannten Gerät als Radiallagereinrichtung zwei voneinander unabhängig an zwei Chassisteilen angeordnete, in Abstand voneinander liegende Radiallager vorgesehen, was einen relativ großen konstruktiven Aufwand darstellt und relativ viel Montagearbeit erfordert und im Hinblick auf einen geringen Raumbedarf in Richtung der Welle nachteilig ist.

Die Erfindung hat sich zur Aufgabe gestellt, die vorstehend angeführten Schwierigkeiten zu beseitigen und ein Gerät der eingangs angeführten Schwierigkeiten zu beseitigen und ein Gerät der eingangs angeführten Gattung so auszubilden, daß die Radiallagereinrichtung zur radialen Lagerung der Welle mit besonders geringem konstruktiven Aufwand ausgebildet ist und daß dabei zugleich auch ein einwandfreies und einfaches Einstellen der Neigung der Welle und damit des Antriebsteiles gewährleistet ist. Hierfür ist die Erfindung dadurch gekennzeichnet, daß der erste Positionierzylinder ein drehbar verstellbarer Excenterzylinder ist, daß beide Positionierzylinder miteinander fest verbunden sind und ein einziges verstellbares Radiallager bilden und daß beide Positionierzylinder zu ihrer verdrehbaren Lagerung vom Bauteilträger her zumindest teilweise umfaßt sind. Dadurch, daß die Radiallagereinrichtung zur radialen Lagerung der Welle nur durch das verstellbare Radiallager gebildet ist, ist eine in konstruktiver Hinsicht besonders einfache und im Hinblick auf Montagearbeit und Raumbedarf vorteilhafte Ausbildung erreicht. Durch das Verbinden dieses verstellbaren Radiallagers mit den beiden zueinander exzentrischen und in Richtung der Welle voneinander in Abstand liegenden Positionierzylindern ist dabei mit einem besonders geringen konstruktiven Aufwand ein einwandfreies Einstellen der Neigung der Welle und damit des Antriebsteiles erreicht. Dieses Einstellen der Neigung ist hierbei mit einem besonders einfachen Einstellvorgang durchführbar, weil hierbei lediglich die beiden mit dem verstellbaren Lager verbundenen Positionierzylinder verdreht werden müssen, wobei durch die exzentrische Anordnung der beiden Positionierzylinder zueinander beim Verdrehen derselben das verstellbare Radiallager der Neigung der Welle und des damit verbundenen Antriebsteiles, wobei es sich um eine Antriebswelle für den Aufzeichnungsträger oder um eine mit einer Antriebswelle zusammenwirkende Andruckrolle handeln kann, ist bekanntlich deshalb notwendig, weil der Antriebsteil in einer räumlichen Lage gegenüber dem Aufzeichnungsträger positioniert werden muß, in der er aufden von ihm angetriebenen Aufzeichnungsträger eine solche Kraftwirkung ausübt, daß der Aufzeichnungsträger bei seiner Fortbewegung stets exakt in einer vorgegebenen Richtung fortbewegt und dadurch stets in der gleichen Relativlage an den Abtasteinrichtungen für den Aufzeichnungsträger entlang transportiert wird, was bei derartigen Geräten für einwandfreie Aufzeichnungs- bzw. Wiedergabevorgänge besonders wichtig ist.

Aus der DE-AS 11 40 737 ist es an sich bekannt, eine zu einer Antriebswelle für den Aufzeichnungsträger verlängerte Welle mit nur einem gegenüber dem durch eine Magnetkopfplatte gebildeten Bauteilträger verstellbaren Radiallager drehbar zu lagern. Dabei besteht aber die zum instellen der Neigung der Welle vorgesehene Einstelleinrichtung, die drei an einem kreisscheibenförmigen Flansch des Radiallagers angreifende, je gegen eine Tellerfeder wirkende Einstellschrauben aufweist, aus relativ vielen Einzelteilen und erfordert das Einstellen der Neigung der Welle, was durch Verdrehen der drei Einstellschrauben erfolgt, einen relativ arbeits- und zeitaufwendigen Vorgang. Demgegenüber ist der konstruktive Aufwand für das Einstellen der Neigung der Welle und damit des Antriebsteiles beim erfindungsgemäßen Gerät besonders gering und kann das Einstellen dieser Neigung mit einem besonders einfachen Vorgang erfolgen.

Der weitere Positionierzylinder kann exzentrisch zur Welle angeordnet sein, wobei dann beide zueinander exzentrisch liegenden Positionierzylinder exzentrisch zur Welle angeordnet sind. Dies ist hinsichtlich eines großen Einstellbereiches für die Neigungseinstellung vorteilhaft, erfordert aber einen etwas höheren Aufwand bei der Herstellung des mit den Positionierzylindern verbundenen verstellbaren Radiallagers. Als vorteilhaft hat sich erwiesen, wenn der zweite Positionierzylinder koaxial zur Welle angeordnet ist. Hierdurch ist ein in der Praxis ausreichend großer Einstellbereich für die Neigungseinstellung erzielt und zugleich eine einfache Herstellung des mit den Positionierzylindern verbundenen verstellbaren Radiallagers erreicht.

In diesem Zusammenhang hat sich als besonders vorteilhaft erwiesen, wenn das verstellbare Radiallager aus einer die Welle aufnehmenden Lagerbuchse, die an ihrer Mantelfläche den zur Welle koaxialen zweiten Positionierzylinder aufweist, und aus einer auf die Lagerbuchse aufgesetzten, an derselben unverdrehbar festgehaltenen Hülse besteht, die an ihrer Mantelfläche den zur Welle exzentrischen ersten Positionierzylinder aufweist. Auf diese Weise ist erreicht, daß die Lagerbuchse des verstellbaren Radiallagers vollkommen rotationssymmetrisch ausgebildet und daher einfach hergestellt werden kann, wobei dann aufdiese Lagerbuchse die den exzentrischen Positionierzylinder aufweisende Hülse einfach aufgesetzt wird, so daß sich insgesamt gesehen eine besonders günstige Herstellung des mit den beiden Positionierzylindern verbundenen verstellbaren Radiallagers ergibt.

Das Verdrehen der Positionierzylinder des verstellbaren Radiallagers zum Einstellen der Neigung der Welle und des Antriebsteiles kann beispielsweise nach dem Lösen einer Verdrehsicherung ohne Werkzeug von Hand aus erfolgen. Auch kann das mit den Positionierzylindern verbundene verstellbare Radiallager im Bereich eines seiner Enden einen Sechskantabschnitt aufweisen, der mit Hilfe eines Gabelschlüssels verdreht werden kann, was aber vielfach auf räumlich Schwierigkeiten stößt. Als besonders vorteilhaft hat sich daher erwiesen, wenn das verstellbare Radiallager einen Zahnkranz aufweist, der mit einem selbst antreibbaren Verstellzahnrad zusammenwirkt der als Werkzeug zum Verstellen des Radiallagers dient. Hierdurch ist eine einfache Verdrehung der Positionierzylinder zum Verstellen des verstellbaren Radiallagers über jeden gewünschten Verdrehbereich erreicht.

Das Verstellzahnrad kann fix am Bauteilträger neben dem verstellbaren Radiallager drehbar gelagert sein, wobei dann in jedem Gerät ein solches Verstellzahnrad enthalten ist. Als vorteilhaft hat sich erwiesen, wenn im Bauteilträger neben dem verstellbaren Radiallager eine Lagerbohrung zur Aufnahme eines von einer ersten Seitenfläche des Verstellzahnrades abstehenden Lagerwellenstumpfes vorgesehen ist, wobei das Verstellzahnrad vom Bauteilträger lösbar ist und an seiner zweiten Seitenfläche eine von dieser abstehende, zum Lagerwellenstumpf koaxiale Handhabe zum Verdrehen des Verstellzahnrades aufweist. Hiedurch ist erreicht, daß im Bauteilträger jedes Gerätes nur eine einfache Lagerbohrung vorgesehen ist, was praktisch keinen Aufwand darstellt.

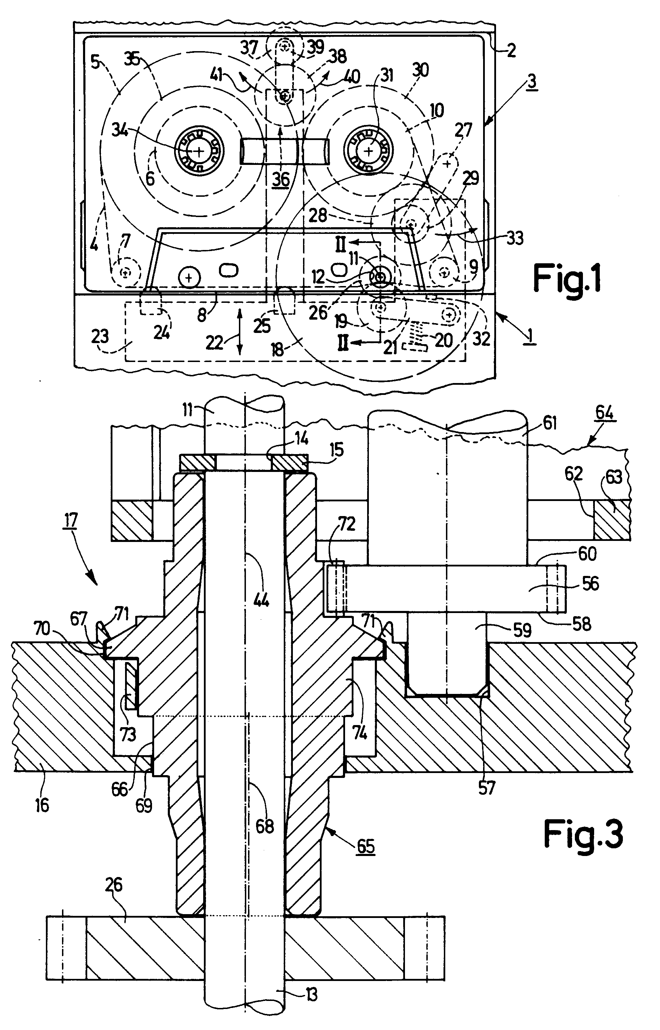

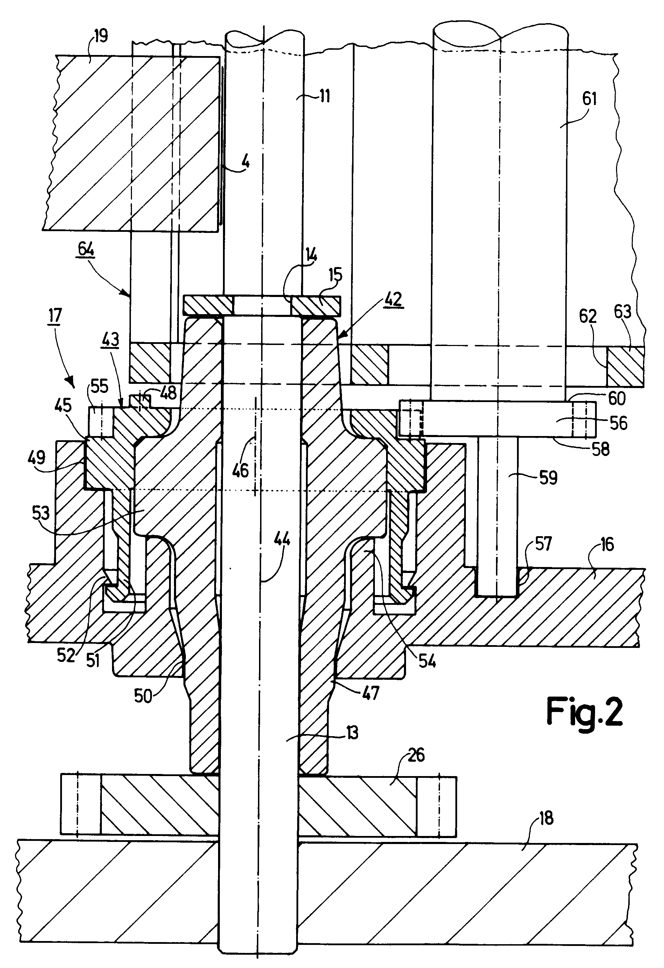

Die Erfindung wird im folgenden anhand von zwei in den Zeichnungen dargestellten Ausführungsbeispielen näher beschrieben, auf die sie jedoch nicht beschränkt sein soll. Die Fig.1 zeigt schematisch in Draufsicht etwa in natürlicher Größe einen Teil eines Aufzeichnungs- und Wiedergabegerätes für einen in einer Kassette untergebrachten bandförmigen Aufzeichnungsträger mit einer Antriebswelle für denselben, die auf erfindungsgemäße Weise drehbar gelagert und in ihrer Neigung gegenüber dem Aufzeichnungträger einstellbar ist. Die Fig.2 zeigt in etwa zehnfacher Vergrößerung gegenüber Fig.1 in einem Schnitt längs der Linie II-II in Fig.1 die Antriebswelle des Gerätes gemäß Fig.1 und deren Lagereinrichtung gemäß einem ersten Ausführungsbeispiel der Erfindung. Die Fig.3 zeigt in analoger Weise wie die Fig.2 die Antriebswelle für den Aufzeichnungträger eines Aufzeichnungs- und Wiedergabegerätes und deren Lagereinrichtung gemäß einem zweiten Ausführungsbeispiel der Erfindung.

Das in Fig.1 dargestellte Aufzeichnungs- und Wiedergabegerät 1 weist eine muldenartige Vertiefung 2 auf, in die eine Kassette 3 einsetzbar ist, deren konstruktiver Aufbau allgemein bekannt ist. In der Kassette 3 ist ein bandförmiger, magnetisierbarer Aufzeichnungsträger 4 untergebracht, der im folgenden kurz Magnetband genannt ist. Das Magnetband 4 verläuft im dargestellten Betriebszustand von einem mit einem vollen Bandwickel 5 bewickelten ersten Wickelkern 6 über einer erste Bandführung 7 entlang einer mit nicht dargestellten Durchbrüchen zum Hindurchtritt von Magnetköpfen und einer Andruckrolle versehenen Schmalseite 8 und über eine zweite Bandführung 9 zu einem unbewickelten zweiten Wickelkern 10.

Zum Antreiben des Magnetbandes 4 bei einem normalen Aufzeichnungs-oder Wiedergabevorgang, wobei das Magnetband bekanntlich mit konstanter Fortbewegungsgeschwindigkeit angetrieben wird, weist das Gerät 1 eine aus Stahl bestehende Antriebswelle 11 auf, die einen zylindrischen Antriebsteil für das Magnetband 4 bildet. Die Antriebswelle 11 ist durch Öffnungen 12 in den beiden Hauptwänden der Kassette 2 in dieselbe eingeführt und hintergreift das Magnetband 4. Wie aus Fig.2 ersichtlich ist, ist die Antriebswelle 11 durch die Verlängerung einer Welle 13 gebildet,also einstückig und koaxial mit der Welle 13 verbunden. Im Übergangsbereich zwischen der Antriebswelle 11 und der Welle 13 ist ein Einstich 14 vorgesehen, in den eine Sicherungsscheibe 15 eingesetzt ist, die zur axialen Lagerung der Antriebswelle 11 und der Welle 13 dient. Zur radialen Lagerung der Welle 13 an einem als Bauteilträger vorgesehenen, aus Kunststoff bestehenden Chassis 16 ist eine Radiallagereinrichtung 17 vorgesehen, deren Aufbau nachfolgend noch detailliert beschrieben ist. Auf die mit der Antriebswelle 11 koaxial verbundene Welle 13 ist eine Schwungscheibe 18 aufgesetzt, die auf nicht näher dargestellte Weise von einem Motor her, beispielsweise über einen Antriebsriemen, mit konstanter Drehzahl antreibbar ist.

Zum Zusammenwirken mit der Antriebswelle 11 weist das Gerät 1 eine Andruckrolle 19 auf, mit der bei einem normalen Aufnahme- oder Wiedergabevorgang das Magnetband 4 an die Antriebswelle 11 andrückbar ist. Die Andruckrolle 19 ist über einen mit einer Feder 20 belasteten Hebel 21 an einem in Richtung des Doppelpfeiles 22 verstellbaren Schieber 23 schwenkbar gelagert. In Fig.1 ist der Schieber 23 in jener Position dargestellt, die dieser bei einem normalen Aufnahme- oder Wiedergabevorgang einnimmt, wobei die Andruckrolle 19 das Magnetband 4 gegen die Antriebswelle 11 drückt und ein Löschmagnetkopf 24 und ein Aufnahme/Wiedergabe-Magnetkopf 25 durch die Druchbrüche in der Schmalseite 8 der Kassette 3 hindurch mit dem Magnetband 4 in Kontakt stehen.

Mit der mit der Antriebswelle 11 koaxial verbundenen Welle 13 ist ferner ein Zahnrad 26 drehfest verbunden, das ebenfalls zur axialen Lagerung der Antriebswelle 11 und der Welle 13 dient. Mit dem Zahnrad 26 steht bei einem normalen Aufnahme- oder Wiedergabevorgang ein mittels eines Hebels 27 am Chassis 16 schwenkbar gelagertes Zwischenzahnrad 28 in Eingriff. Das Zwischenzahnrad 28 ist koaxial mit einem weiteren Zwischenzahnrad 29 drehfest verbunden, das bei einem normalen Aufnahme-oder Wiedergabevorgang mit einem Zahnrad 30 in Eingriff steht. Mit dem Zahnrad 30 ist über eine nicht dargestellte Rutschkupplung ein zu demselben koaxialer Wickeldorn 31 zum Antreiben des zweiten Wickelkerns 10 antreibbar. Auf diese Weise ist bei einem normalen Aufnahme- oder Wiedergabevorgang von der mit der Antriebswelle 11 koaxial verbundenen Welle 13 her über das Zahnrad 26 und die beiden Zwischenzahnräder 28 und 29 sowie das Zahnrad 30, die Rutschkupplung und den Wickelkern 31 der zweite Wickelkern 10 antreibbar, um das von der Antriebswelle 11 gemeinsam mit der Andruckrolle 19 angetriebene Magnetband 4 auf den Wickelkern 10 aufzuwickeln.

Der Schieber 23 ist aus der in Fig.1 dargestellten Betriebsposition von der Kassette 3 wegverschiebbar, wobei dann die Magnetköpfe 24 und 25 außer Kontakt vom Magnetband 4 kommen und die Andruckrolle 19 von der Antriebswelle 11 abhebt und der Hebel 21 sich gegen einen Anschlag 32 des Schiebers 23 legt. Ferner werden dabei über eine nicht dargestellte, am Schieber 23 vorgesehene Verstellkulisse die Zwischenzahnräder 28 und 29 vom Schieber 23 in Richtung des Pfeiles 33 so verstellt, daß das Zwischenzahnrad 29 außer Eingriff vom Zahnrad 30 kommt. In der von der Kassette 3 wegverschobenen Ruheposition des Schiebers 23 kann das Magnetband 4 zwischen den beiden Wickelkernen 6 und 10 in entgegengesetzten Fortbewegungsrichtungen schnell umgespult werden. Dabei erfolgt der Antrieb des Magnetbandes 4 in bekannter Weise über die Wickelkerne 6 und 10, von denen der Wickelkern 6 mit einem Wickeldorn 34 und der Wickelkern 10 mit dem bereits erwähnten Wickeldorn 31 in Antriebsverbindung steht. Der Wickeldorn 34 ist über eine weitere nicht dargestellte Rutschkupplung von einem zu demselben koaxialen Zahnrad 35 her antreibbar.

Zum wahlweisen Antreiben der beiden zu den Wickeldornen 34 und 31 koaxialen Zahnräder 35 und 30 beim Umspulen weist das Gerät 1 eine Umspul-Antriebseinrichtung 36 auf. Diese umfaßt ein am Chassis 16 ortsfest angeordnetes, in entgegengesetzten Drehrichtungen rotierend antreibbares erstes Zahnrad 37, das mit einem zweiten Zahnrad 38 in Eingriff steht. Das zweite Zahnrad 38 ist auf einem Hebel 39 drehbar gelagert, der um die Achse des ersten Zahnrades 37 schwenkbar ist. Je nach Drehrichtung des ersten Zahnrades 37 wird das zweite Zahnrad 38 in Richtung eines der beiden Pfeile 40 bzw. 41 verschwenkt und kommt mit einem der beiden zu den Wickeldornen koaxialen Zahnräder 30 bzw. 35 zum Antreiben derselben in Eingriff. Zu erwähnen ist noch, daß das zweite Zahnrad 38 von einer am Schieber 23 vorgesehenen Arretiereinrichtung in einer neutralen Mittelposition arretiert wird, wenn der Schieber 23 seine zur Kassette hin verschobene Betriebsposition einnimmt, wie dies in Fig.1 dargestellt ist. Hiedurch ist gewährleistet, daß bei einem normalen Aufnahme- oder Wiedergabevorgang ein Umspulvorgang ausgeschlossen ist. Bei in seiner Ruheposition befindlichem Schieber 23 gibt die Arretiereinrichtung das zweite Zahnrad 38 zum Verschwenken frei.

Im folgenden wird anhand der Figur 2 die Radiallagereinrichtung 17 für die Welle 13 und die mit letzterer koaxial verbundene Antriebswelle 11 näher beschrieben. Die Radiallagereinrichtung ist in konstruktiver Hinsicht auf besonders einfache Weise nur durch ein einziges Radiallager 17 gebildet, das gegenüber dem Chassis 16 quer zur Welle 13 verstellbar ist. Dieses verstellbare Radiallager 17 besteht aus einer die Welle 13 aufnehmenden, aus Sintermetall bestehenden Lagerbuchse 42 und aus einer auf die Lagerbuchse 42 aufgesetzten, aus Kunststoff bestehenden Hülse 43. Die Lagerbuchse 42 ist als sogenanntes Zweifachlager ausgebildet und umfaßt dementsprechend die Welle 13 mit zwei je in einen Endbereich der Lagerbuchse 42 mündenden Lagerabschnitten. Zwischen den beiden Lagerabschnitten ist die Lagerbuchse 42 von der Welle 13 freigestellt. Selbstverständlich könnte die Lagerbuchse auch einen über ihre gesamte Länge in axialer Richtung sich erstreckenden, die Welle 13 umfassenden Lagerabschnitt aufweisen. Die Hülse 43 ist auf die Lagerbuchse 42 aufgepreßt und auf diese Weise an der Lagerbuchse unverdrehbar festgehalten. Die Hülse könnte mit der Lagerbuchse auch durch Kleben oder auf andere Weise verbunden sein.

Zum Einstellen der Neigung der Welle 13 und der Antriebswelle 11 gegenüber dem Magnetband 4 ist das verstellbare Radiallager 17 mit einem zu der Welle 13 exzentrisch angeordneten ersten Positionierzylinder 45 zum Positionieren des verstellbaren Radiallagers 17 quer zur Welle 13 und mit einem von dem ersten Positionierzylinder 45 in Richtung der Welle 13 in Abstand und zu demselben exzentrisch liegenden weiteren Positionierzylinder 47 zum Positionieren des verstellbaren Radiallagers 17 quer zur Welle 13 verbunden. Die Achse der Welle 13 ist in Fig.2 mit einer strichpunktierten Linie 44 und die Achse des Positionierzylinders 45 ist in Fig.2 mit einer strichpunktierten Linie 46 angegeben. Die Exzentrizität beträgt in vorliegendem Fall etwa 0,15mm, was sich bei dieser Ausführung als ein in der Praxis günstiger Wert erwiesen hat. Um die Exzentrizität anzuzeigen, weist das verstellbare Radiallager 17 als Markierung an der Hülse 43 einen zylindrischen Fortsatz 48 auf. Dieser Fortsatz 48 wird bei der Montage des verstellbaren Radiallagers 17 in eine vorgegebene Relativlage gegenüber dem Chassis 16, die beispielsweise durch eine Gegenmarkierung angegeben ist, gebracht. Die beiden Positionierzylinder 45 und 47 sind jeder zu seiner verdrehbaren Lagerung vom Chassis 16 her umfaßt. Dabei ist der erste Positionierzylinder 45 in einen hohlzylindrischen Einstich 49 und der weitere Positionierzylinder 47 in einen hohlzylindrischen Durchbruch 50 im Chassis 16 aufgenommen. Die beiden Positionierzylinder sind in dem Einstich bzw. in dem Durchbruch mit Reibschluß so kräftig festgehalten, daß im normalen Betriebsfall die beiden Positionierzylinder gegen ungewolltes Verdrehen und folglich das verstellbare Radiallager 17 gegen ungewolltes Verstellen gesichert sind. Im vorliegenden Fall ist der zur Welle 13 exzentrisch angeordnete erste Positionierzylinder 45 an der Mantelfläche der Hülse 43 und der weitere Positionierzylinder 47, der hiebei in einfacher Weise koaxial zur Welle 13 angeordnet ist, an der Mantelfläche der Lagerbuchse 42 vorgesehen. Hiedurch ist erreicht, daß die Lagerbuchse 42 vollkommen rotationssymmetrisch ausgebildet ist und daher in üblicher Weise einfach hergestellt werden kann. Auf diese rotationssymmetrisch ausgebildete Lagerbuchse 42 kann die als Kunststoffteil trotz ihrer rotationsunsymmetrischen Ausbildung auch einfach herstellbare Hülse 43 einfach aufgepreßt werden, so daß insgesamt gesehen eine besonders günstige Herstellung des verstellbaren Radiallagers 17 sich ergibt. Die auf die Lagerbuchse 42 aufgepreßte Hülse 43 weist im Anschluß an ihren exzentrisch zur Welle 13 angeordneten Positionierzylinder 45 einen mit in Fig.2 nicht sichtbaren, in axialer Richtung verlaufenden Schlitzen versehenen, zur Welle 13 koaxialen Hülsenabschnitt 51 auf, dessen abgewinkelte, federnde Enden eine nasenförmige Ringwulst 52 am Chassis 16 hintergreifen und auf diese Weise die Hülse 43 mit ihrem Positionierzylinder 45 in dem Einstich 49 fixieren. Die Lagerbuchse 42 stützt sich hiebei mit dem die Hülse 43 tragenden Zylinderabschnitt 53 in axialer Richtung an einem hohlzylindrischen Stützzylinder 54 des Chassis 16 ab. Erwähnt sei nochmals, daß die axiale Lagerung der Welle 13 durch den Sicherungsring 15 und das Zahnrad 26 erfolgt, die sich an den gegenüberliegenden Enden der Lagerbuchse 42 abstützen. Selbstverständlich könnte die axiale Lagerung der Welle 13 auch anders ausgebildet sein und beispielsweise ein mit dem freien Ende der Welle 13 zusammenwirkendes Spurlager aufweisen.

Zum Verstellen des verstellbaren Radiallagers 17, um eine Neigungseinstellung der Welle 13 und der Antriebswelle 11 gegenüber dem Magnetband 4 vornehmen zu können, weist dasselbe an der mit der Lagerbuchse 42 verbundenen Hülse 43 einen zum ersten Positionierzylinder 45 koaxialen Zahnkranz 55 auf, der mit einem als Werkzeug zum Verstellen des Radiallagers 17 dienenden, selbst antreibbaren Verstellzahnrad 56 zusammenwirkt. Der Zahnkranz 55 erstreckt sich über den gesamten Umfangsbereich der Hülse 43; er könnte aber auch nur an einem Teil ihres Umfangsbereiches vorgesehen sein. Im Chassis 16 ist neben dem verstellbaren Radiallager 17 eine Lagerbohrung 57 zur Aufnahme eines von einer ersten Seitenfläche 58 des Verstellzahnrades 56 abstehenden Lagerwellenstumpfes 59 vorgesehen. Das Verstellzahnrad 56 ist in vorliegendem Fall vom Chassis 16 lösbar und weist an seiner zweiten Seitenfläche 60 eine von dieser abstehende, zum Lagerwellenstumpf 59 koaxiale Handhabe 61 zum Verdrehen des Verstellzahnrades 56 auf. Auf diese Weise ist ein Werkzeug geschaffen, mit dem in einer Vielzahl von Geräten eine Neigungseinstellung der Welle 13 und der Antriebswelle 11 durchführbar ist. Im Gerät selbst ist dabei lediglich eine Lagerbohrung im Chassis zur drehbaren Lagerung des Verstellzahnrades vorgesehen, was praktisch keinen Aufwand bedeutet. Die Handhabe 61 ist duch je eine Öffnung 62 in jeder Hauptwand 63 einer Meßkassette 64 hindurchführbar. Die Meßkassette 64 weist an sich denselben Aufbau wie die in Fig.1 dargestellte Kassette 3 auf, sie enthält nur zusätzliche Einrichtungen, um bei der Fortbewegung des Magnetbandes den Lauf des Magnetbandes entlang der Magnetköpfe 24 und 25 und über die Antriebswelle 11 beobachten bzw. kontrollieren zu können. Die Handhabe 61 wirde bei einer manuellen Neigungseinstellung der Welle 13 und der Antriebswelle 11 von Hand aus angetrieben; sie kann aber auch motorisch angetrieben werden, was dann der Fall ist, wenn die Neigungseinstellung mit Hilfe eines rechnergesteuerten Einstellautomaten erfolgt.

Das Einstellen der Neigung der Antriebswelle 11 nach deren Montage im Gerät ist bekanntlich deshalb notwendig, weil die Antriebswelle 11 in einer räumlichen Lage gegenüber dem Magnetband 4 positioniert werden muß, in der sie auf das von ihr angetriebene Magnetband 4 eine solche Kraftwirkung ausübt, daß das Magnetband 4 stets exakt in einer vorgegebenen Richtung fortbewegt und stets in der gleichen Relativlage gegenüber den Magnetköpfen 24 und 25 an diesen entlang transportiert wird, was bei derartigen Geräten für einwandfreie und stets reproduzierbare Aufzeichnungs-und Wiedergabevorgänge besonders wichtig ist. Zum Montieren der Antriebswelle 11 wird das verstellbare Radiallager 17 in einfacher Weise von der Kassettenseite her in das Chassis 16 eingesetzt, wobei der Fortsatz 48 die vorgegebene Relativlage gegenüber dem Chassis 16 einnimmt, und danach die Antriebswelle 11 von der Gegenseite her durch die Lagerbuchse 42 hindurchgeführt und die Welle 13 in die Lagerbuchse 42 eingeführt und schließlich der Sicherungsring 15 aufgesetzt. Zum Einstellen der Neigung der Antriebswelle 11 wird eine Meßkassette 64 in das Gerät eingesetzt und das Magnetband 4 desselben wie bei einem normalen Aufnahme- oder Wiedergabevorgang angetrieben. Ferner wird das Verstellzahnrad 56 einfach durch die Meßkassette 64 hindurchgesteckt und mit dem Zahnkranz 55 in Eingriff gebracht, wobei der Lagerwellenstumpf 59 in die Lagerbohrung 57 am Chassis 16 zur verdrehbaren Lagerung des Verstellzahnrades 56 eintritt. Nun wird zur Neigungseinstellung der Antriebswelle 11 das Verstellzahnrad 56 rotierend angetrieben, wodurch der Zahnkranz 55 angetrieben wird, was unter Überwindung des Reibungsschlusses zwischen den beiden Positionierzylinder 45 und 47 und dem Chassis 16 ein Verdrehen der beiden Positionierzylinder im Chassis zur Folge hat. Diese Verdrehen der beiden Positionierzylinder 45 und 47 hat aufgrund ihrer exzentrischen Lage zueinander eine Taumelbewegung des verstellbaren Radiallagers 17 praktisch um den Positionierzylinder 47 zur Folge, wobei das verstellbare Radiallager 17 quer zur Welle 13 verstellt wird. Bei dieser Taumelbewegung kommt es im Bereich des Einstiches 49 und des Durchbruches 50 zu einer durch das verstellbare Radiallager 17 bzw. durch die damit verbundenen Positionierzylinder 45 und 47 verursachten Verformung des Chassis 16 im Mikrometerbereich.

Diese Taumelbewegung des verstellbaren Radiallagers 17 bewirkt selbstverständlich eine entsprechende Taumelbewegung der Antriebswelle 11, von der im vorliegenden Zusammenhang zwei Komponenten zu betrachten sind, nämlich eine Komponente, die gemäß Fig.2 parallel zur Ebene des Magnetbandes 4 verläuft, und eine weitere Komponente, die gemäß Fig.2 senkrecht zur Ebene des Magnetbandes 4 verläuft. Die erstgenannte Komponente hat sehr wesentlichen Einfluß auf die einwandfreie Fortbewegung des Magnetbandes entlang der Magnetköpfe, und sie muß durch entsprechende Einstellung der Neigung der Antriebswelle 11 so gewählt werden, daß das Magnetband 4 stets auf gleichbleibendem Niveau entlang der Magnetköpfe 24 und 25 fortbewegt wird. Die zweitgenannte Komponente hat bei derartigen Geräten praktisch keinen störenden Einfluß auf die einwandfreie Fortbewegung des Magnetbandes und kann daher praktisch als vernachlässigbar angesehen werden. Das Einstellen der Neigung der Antriebswelle 11 durch das Antreiben des Verstellzahrades 56 und das dadurch bewirkte Verstellen des Radiallagers 17 wird in vorliegendem Fall bei von der Antriebswelle 11 angetriebenem Magnetband 4 so lange vorgenommen, bis mit Hilfe der Maßkassette 64 der gewünschte Bandlauf entlang der Magnetköpfe 24 und 25 festgestellt wird. Das Einstellen der Neigung der Antriebswelle erfolgt mit einem besonders einfachen Einstellvorgang durch Verdrehen der Positionierzylinder und die Einstellung der Neigung der Antriebswelle erfolgt auf dynamische Weise, was besonders vorteilhaft ist. Nach erfolgter Neigungseinstellung wird das Verstellzahnrad 56 und danach die Meßkassette 64 aus dem Gerät entnommen.

Wie aus vorstehender Beschreibung hervorgeht, weist die Radiallagereinrichtung für die Antriebswelle einen in konstruktiver Hinsicht besonders einfachen Aufbau mit nur einem verstellbaren Radiallager auf, was zusätzlich auch im Hinblick auf eine möglichst einfache Montage und eine geringe Bauhöhe des Gerätes vorteilhaft ist. Durch die Aufteilung des verstellbaren Radiallagers in eine rotationssymmetrische Lagerbuchse und eine auf diese aufgesetzte rotationsunsymmetrische Hülse wird eine besonders günstige Herstellung dieses verstellbaren Radiallagers erreicht. Das Einstellen der Neigung erfolgt in besonders einfacher Weise nur durch einfaches Verdrehen der beiden Positionierzylinder im Chassis. Die Verstellung des verstellbaren Radiallagers über einen mit einem Verstellzahnrad antreibbaren Zahnkranz vorzunehmen, bietet die Vorteile einer einfachen, keinen räumlichen Begrenzungen unterworfenen Verstellbewegung.

Bei dem in Fig.3 dargestellten zweiten Ausführungsbeispiel ist die Radiallagereinrichtung ebenso wie beim zuvor beschriebenen Ausführungsbeispiel nur durch ein einziges verstellbares Radiallager 17 gebildet. Dieses verstellbare Radiallager 17 besteht hiebei einfach nur aus einer Lagerbuchse 65, die einstückig mit zwei zueinander exzentrisch und in Richtung der Welle 13 in Abstand voneinander angeordneten Positionierzylindern 66 und 67 verbunden ist. Von diesen beiden Positionierzylindern ist der Positionierzylinder 66, dessen Achse in Fig.3 mit einer strichpunktierten Linie 68 angegeben ist, exzentrisch zur Welle 13 und der Positionierzylinder 67 koaxial zur Welle 13 angeordnet. Bei dieser Lagerausbildung beträgt die Exzentrizität etwa 0,07mm, was sich bei dieser Ausbildung für die Praxis als günstig erwiesen hat. Der Positionierzylinder 66 ist in einem hohlzylindrischen Durchbruch 69 des Chassis 16 und der Positionierzylinder 67 in einem hohlzylindrischen Einstich 70 des Chassis 16 drehbar gelagert. Zum Festhalten der Lagerbuchse 65 im Chassis 16 weist dasselbe eine Mehrzahl von Klemmnasen 71 auf, von denen in Fig.3 zwei sichtbar sind. Zum Verdrehen der beiden Positionierzylinder 66 und 67 gegenüber dem Chassis 16, wodurch die Lagerbuchse 65 zum Einstellen der Neigung der Antriebswelle 11 verstellbar ist, weist die Lagerbuchse 65 einen um einen Teil des Umfangs verlaufenden, koaxial zur Welle 13 angeordneten Zahnkranz 72 auf, der mit dem vom Chassis 16 lösbaren Verstellzahnrad 56 zusammenwirkt. Zum Sichern der Lagerbuchse 65 gegen ungewünschtes Verdrehen ragt vom Chassis 16 ein federnder Rastlappen 73 weg, der mit seinem freien Ende gegen die Mantelfläche eines Zylinderabschnittes 74 der Lagerbuchse 65 drückt, wobei diese Mantelfläche aus einer Vielzahl von schmalen, mit ihrer Längserstreckung in Richtung der Welle 13 verlaufenden, ebenen Flächenabschnitten besteht.

Auch bei diesem Ausführungsbeispeil ist die Radiallagereinrichtung vorteilhafterweise nur durch das verstellbare Radiallager gebildet. Zum Einstellen der Neigung der Antriebswelle werden die beiden Positionierzylinder nur gegenüber dem Chassis einfach verdreht, so daß auch in diesem Fall ein besonders einfacher Einstellvorgang vorliegt. Beim Einstellen der Neigung der Antriebswelle führt das durch die Lagerbuchse gebildete verstellbare Radiallager eine Taumelbewegung durch, die im vorliegenden Fall praktisch um den näher zur Kassette liegenden Positionierzylinder erfolgt. Durch die einstückige Ausbildung des verstellbaren Radiallagers ist eine im Hinblick auf möglichst wenige Einzelteile vorteilhafte Ausbildung erreicht, die auch im Hinblick auf eine geringe Bauhöhe des Gerätes vorteilhaft ist.

Selbstverständlich sind im Rahmen der Erfindung noch weitere Ausführungen möglich. So kann beispielsweise auch eine mit einer Antriebswelle zusammenwirkende Andruckrolle auf erfindungsgemäße Weise mit nur einem verstellbaren Radiallager drehbar gelagert und in ihrer Neigung gegenüber dem Aufzeichnungsträger eingestellt werden, wobei dann der Bauteilträger beispielsweise durch den Hebel am Schieber gebildet ist. Bei den beiden vorstehend beschriebenen Ausführungsbeispielen weisen die je den exzentrisch zur Welle angeordneten Positionierzylinder drehbar aufnehmenden Lagerabschnitte des Chassis dieselbe Exzentrizität wie der von ihnen aufgenommene Positionierzylinder auf; es können aber diese Lagerabschnitte auch eine geringere Exzentrizität aufweisen als die von ihnen aufgenommenen Positionierzylinder, wodurch der Einfluß der senkrecht zum Magnetband verlaufenden Komponente der Taumelbewegung beim Neigungseinstellen besonders klein gemacht wird. Es können auch beide Positionierzylinder eines verstellbaren Radiallagers exzentrisch zur Welle angeordnet sein, wodurch ein größerer Einstellbereich erreichbar ist. Zwei solche exzentrisch zur Welle angeordnete Positionierzylinder können auch in unterschiedlichen radialen Richtungen liegende Exzentrizitäten aufweisen. Die Positionierzylinder können zu ihrer drehbaren Lagerung auch nur teilweise vom Bauteilträger umfaßt sein. Selbstverständlich ist die Erfindung auch in Geräten anwendbar, bei denen der Aufzeichnungsträger nicht in einer Kassette untergebracht ist, sondern zwischen zwei in das Gerät einsetzbaren Spulen verläuft.

**Patentansprüche**

1. Aufzeichnungs- und/oder Wiedergabegerät für einen bandförmigen Aufzeichnungsträger (4), mit einem Bauteilträger (16), einer mit einer Welle (13) koaxial verbundenen Antriebswelle (11), um den Aufzeichnungsträger anzutreiben, und mit einer zur radialen Lagerung der Welle (13) dienenden Radialagereinrichtung, die am Bauteilträger (16) vorgesehen ist und die aus einem an einer Seite der Welle (13) und zu der Welle (13) senkrecht verstellbaren ersten Positionierzylinder und einem in Richtung der Welle (13) mit Abstand angeordneten zur Welle (13) fluchtenden zweiten Positionierzylinder (47,67) besteht, um die Neigung der Welle (13) einzustellen, dadurch gekennzeichnet, daß der erste Positionierzylinder ein drehbar verstellbarer Excenterzylinder (45, 69) ist, daß beide Positionierzylinder (45, 47; 69, 67) miteinander fest verbunden sind und ein einziges verstellbares Radiallager (17) bilden und daß beide Positionierzylinder (45, 47; 69, 67) zu ihrer verdrehbaren Lagerung vom Bauteilträger (16) her zumindest teilweise umfaßt sind.

2.  Gerät nach Anspruch 1, dadurch gekennzeichnet, daß der zweite Positionierzylinder (47) koaxial zur Welle (13) angeordnet ist.

3.  Gerät nach Anspruch 2, dadurch gekennzeichnet, daß das verstellbare Radiallager (17) aus einer die Welle (13) aufnehmenden Lagerbuchse (42), die an ihrer Mantelfläche den zur Welle (13) koaxialen zweiten Positionierzylinder (47) aufweist, und aus einer auf die Lagerbuchse (42) aufgesetzten, an derselben unverdrehbar festgehaltenen Hülse (43) besteht, die an ihrer Mantelfläche den zur Welle exzentrischen ersten Positionierzylinder (45) aufweist.

4.  Gerät nach einem der vorhergehenden Ansprüche, dadurch gekennzeichnet, daß das verstellbare Radiallager (17) einen Zahnkranz (55) aufweist, der mit einem selbst antreibbaren Verstellzahnrad zusammenwirkt, der als Werkzeug zum Verstellen des Radiallagers (17) dient.

5.  Gerät nach Anspruch 4, dadurch gekennzeichnet, daß im Bauteilträger (16) neben dem verstellbaren Radiallager (17) eine Lagerbohrung (57) zur Aufnahme eines von einer ersten Steinfläche (58) des Verstellzahnrades (56) abstehenden Lagerwellenstumpfes (59) vorgesehen ist, wobei das Verstellzahnrad (56) vom Bauteilträger (16) lösbar ist und an seiner zweiten Seitenfläche (60) eine von dieser abstehende, zum Lagerwellenstumpf (59) koaxiale Handhabe (61) zum Verdrehen des Verstellzahnrades (56) aufweist.

## Claims

1.  A recording and/or reproducing apparatus for a record carrier (4) in the form of a tape, comprising a mounting support (16), a capstan (11), which is coaxially connected to a shaft (13), for driving the record carrier, and a radial bearing means for radially supporting the shaft (13), which radial bearing means is provided on the mounting support (16) and comprises a first positioning sleeve, which is situated at one side of the shaft (13) and is adjustable perpendicularly to the shaft (13), and a second positioning sleeve (47, 67), which is spaced from said first positioning sleeve in the axial direction of the shaft (13) and is disposed in line with the shaft (13), for adjusting the inclination of the shaft (13), characterised in that the first positioning sleeve is a rotatable adjustable eccentric cylinder (45, 69), both positioning sleeves (45, 47; 69, 67) are fixedly connected to one another and form a single adjustable radial bearing (17), and both positioning sleeves (45, 47; 69, 67) are at least partly surrounded by the mounting support (16) to support them rotatably.

2.  An apparatus as claimed in Claim 1, characterized in that the second positioning sleeve (47) is coaxial with the shaft (13).

3.  An apparatus as claimed in Claim 2, characterised in that the adjustable radial bearing (17) comprises a bearing bush (42) receiving the shaft (13), the second positioning sleeve (47), which is coaxial with the shaft (13), being provided at the circumferential surface of said bush, and a sleeve member (43) which is nonrotatably mounted on said bush and at whose circumferential surface the first positioning sleeve (45), which is disposed eccentrically of the shaft, is provided.

4.  An apparatus as claimed in any one of the preceding Claims, characterised in that the adjustable radial bearing (17) comprises a toothed portion (55) adapted to cooperate with an independently drivable adjustment gear wheel which serves as a tool for adjusting the radial bearing (17).

5.  An apparatus as claimed in Claim 4, characterised in that adjacent the adjustable radial bearing (17) the mounting support (16) has a bore (57) for receiving a journal (59) which projects from a first radial surface (58) of the adjustment gear wheel (56), the adjustment gear wheel (56) being detachable from the mounting support (16) and comprising at its second radial surface (60) an actuating member (61) for rotating the adjustment gear wheel (56), which actuating member is coaxial with the journal (59) and projects from said second radial surface (60).

## Revendications

1.  Appareil d'enregistrement et/ou de reproduction pour un support d'enregistrement en forme de bande (4), comportant une platine (16), un cabestan (11) relié coaxialement à un arbre (13) pour entraîner le support d'enregistrement et un dispositif à palier radial destiné à assurer le maintien radial de l'arbre (13), qui est prévu sur la platine (16) et qui est constitué d'un premier cylindre positionneur situé d'un côté de l'arbre (13) et réglable perpendiculairement à cet arbre (13) et d'un second cylindre positionneur (47, 67) aligné dans le sens de l'arbre (13) et disposé à distance du premier dans le sens axial de l'arbre (13) pour régler l'inclinaison de l'arbre (13), caractérisé en ce que le premier cylindre positionneur est un cylindre excentrique (45, 69) réglable par rotation, que les deux cylindres positionneurs (45, 47; 69, 67) sont reliés rigidement l'un à l'autre et forment un seul palier radial réglable (17) et que les deux cylindres positionneurs (45, 47; 69, 67) sont au moins partiellement enserrés par la platine (16) en vue de leur montage à rotation.

2. Appareil suivant la revendication 1, caractérisé en ce que le second cylindre positionneur (47) est monté coaxialement à l'arbre (13).

3. Appareil suivant la revendication 2, caractérisé en ce que le palier radial réglable (17) est constitué d'une douille-palier (42) recevant l'arbre (13) qui présente, sur sa surface périphérique, le second cylindre positionneur (47) coaxial à l'arbre (13) et d'une virole (43) montée sur la douille-palier (42) de manière à ne pas pouvoir tourner sur celle-ci, qui, sur sa surface périphérique, présente le premier cylindre positionneur (45) excentrique à l'arbre.

4. Appareil suivit l'une quelconque des revendications précédentes, caractérisé en ce que le palier radial réglable (17) comporte une couronne dentée (55) qui coopère avec une roue dentée de réglage pouvant elle-même être entraînée, qui sert d'outil pour le réglage du palier radial (17).

5. Appareil suivant la revendication 4, caractérisé en ce que, dans la platine (16), à côté du palier radial réglable (17), est prévu un logement de tourillonnement (57) destiné à recevoir un bout d'arbre de tourillonnement (59) faisant salue à partir d'une première face latérale (58) de la roue dentée de réglage (56), la roue dentée de réglage (56) étant amovible par rapport à la platine (16) et présentant, sur sa seconde face latérale (60), une manette (61) coaxiale au bout d'arbre de tourillonnement (59), qui se dresse sur cette face latérale pour faire tourner la roue dentée de réglage (56).

Fig.1

Fig.3

Fig.2